Europäisches Patentamt

European Patent Office

Office européen des brevets

(11) Veröffentlichungsnummer: **0 303 932 B1**

(12) **EUROPÄISCHE PATENTSCHRIFT**

(45) Veröffentlichungstag der Patentschrift: **19.11.92**

(51) Int. Cl.5: **C03C 8/08**

(21) Anmeldenummer: **88112883.9**

(22) Anmeldetag: **08.08.88**

(54) Fluorfreie Superopakemailfritten.

(30) Priorität: **19.08.87 DE 3727644**

(43) Veröffentlichungstag der Anmeldung:
**22.02.89 Patentblatt 89/08**

(45) Bekanntmachung des Hinweises auf die
Patenterteilung:
**19.11.92 Patentblatt 92/47**

(84) Benannte Vertragsstaaten:
**BE DE ES FR GB IT NL**

(56) Entgegenhaltungen:
FR-A- 1 482 766
US-A- 3 216 847

CHEMICAL ABSTRACTS, Vol. 99, No. 6, 8.
August 1983, Seite 248, Zusammenf. 42500n;
"Frit compositions for coating on stainless
steel." & JP-A-58 005 854 (Nippon Felt Co,
NGK Insulators), veroff. 2.2.'83

CHEMICAL ABSTRACTS, Vol. 90, No. 22, 28.
Mai 1979, Seite 314, Zusammenf. 173473t; J.
Wieczorek et al.: "Titanium enamel for coating steel objects." & PL-A-89 218 (Rybnickie
Zaklady Wyrobow Metalowych), veroff:
15-3-'77

CHEMICAL ABSTRACTS, Vol. 90, No. 22, 28.
Mai 1979, Seite 314, Zusammenf. 173476w; W.
Nalepa et al.: "Fluorine-free titanium enamel" & PL-A-87 446 (Rybnickie Zaklady Wyrobow Metalowych), veroff. 31-3-77

A.F. DIETZEL : Emaillierung, Springer Verlag,
1981, Seite 150-151

(73) Patentinhaber: **BAYER AG**

**W-5090 Leverkusen 1 Bayerwerk(DE)**

(72) Erfinder: **Joseph, Werner, Dr.**
**Ludwig Aschoff Strasse 20**
**W-5000 Köln 80(DE)**
Erfinder: **Schittenhelm, Hans-Joachim, Dr.**
**Walter-Flex-Strasse 6**
**W-5090 Leverkusen 1(DE)**

**Beschreibung**

Die Erfindung betrifft fluorfreie, durch $TiO_2$-Ausscheidung getrübte Superopakemailfritten für die Emaillierung von Stahlblech.

Die Trübung von Titanweißemails [T.B. Yee, A.I. Andrews; J. Amer. Ceram. Soc. 39 (1956), S. 188) beruht auf der Kristallisation von Titandioxid aus transparenter Glasmatrix während des Einbrennens der Fritte auf dem Stahlsubstrat. Die gewünschten optischen Eigenschaften wie Helligkeit, Farbort [DIN 5033 und DIN 6174 bzw. ASTM D 2244] und Deckfähigkeit [F.R. Meyer, Ber. Dtsch. Keram. Ges. 28 (1951), S. 205] werden durch Ausscheidung definierter $TiO_2$-Kristallphasen in trübungsoptisch wirksamer Teilchengröße erzeugt.

Titanweißemails wurden bisher rein empirisch entwickelt. Es ist bekannt, daß das $B_2O_3/TiO_2$-Verhältnis [V.V. Vargin, G.P. Smirnova, Steklo i Keram. (1962) 8, S. 35] sowie der Alkaligehalt [A.L. Friedberg, F.A. Petersen u.a., J. Amer. Ceram. Soc. 30 (1947), S. 261] die Menge des sich ausscheidenden $TiO_2$ beeinflußt und $P_2O_5$ [R.D. Shannon, A.L. Friedberg, III. Univ. Eng. Exp. Sta. Bull. 456 (1960)] die Anatasrekristallisation begünstigt. Weiter enthalten hochwertige, brennbeständige Superopakemails einige Gew.-% Fluor [A.L. Friedberg, F.A. Petersen u.a., J. Amer. Ceram. Soc. 33 (1950), S. 17; F. Imoto, G. Yamaguchi u.a., J. Ceram. Assoc. Jap. 61 (1953), S. 97] im Schmelzversatz. Dieses Element hat vielfältige Aufgaben. Es unterstützt den Aufschluß des Rohstoffgemenges beim Schmelzprozeß, erleichtert durch Viskositätserniedrigung das Aufschmelzverhalten der Fritte beim Einbrand und stabilisiert die $TiO_2$-Ausscheidung.

Andererseits verursacht Fluor als Bestandteil der Emailfritten ökologische Probleme bei der Herstellung und Verarbeitung der Emailfritten. Es entstehen vor allem beim Niederschmelzen des Rohstoffgemenges aber auch beim Einbrennen der Fritten gasförmige Fluorverbindungen, deren Entfernung aus den Abluftströmen der Schmelz- und Brennöfen aufwendig und kostspielig ist.

Versuche, fluorfreie Titanweißemails zu entwickeln ergaben bislang unbefriedigende Ergebnisse. Die Eliminierung von Fluor [A. Tomsia, C. Kozubek u.a., Mitt. VDEfa 24 (1976), S. 71; D.F. Ušakov, G.V. Kirilenko u.a., Steklo i Keram. (1982) 6, S. 13] aus den Titanweißemails führte zu harten Fritten, die höhere Einbrenntemperaturen erforderlich machten. Auch waren sie in ihren trübungsoptischen Eigenschaften wie Deckfähigkeit und Brennbeständigkeit den handelsüblichen Emailfritten deutlich unterlegen.

Aufgabe war es nun, Emailfritten ohne Fluor herzustellen, die in ihren Eigenschaften und bei der Herstellung den handelsüblichen Emailfritten vergleichbar sind, die jedoch den Vorteil haben, bei der Herstellung und Verarbeitung keine ökologischen Probleme zu verursachen bzw. keine aufwendige Aufarbeitung der Abluft nach sich ziehen.

Es wurde nun überraschend gefunden, daß die oben genannten Qualitätsnachteile der Emailfritten ohne Fluor vermeidbar sind, wenn bei der Konzeption der Schmelzversätze folgende als Atomverhältniszahlen ausgedrückte Zusammensetzungen eingehalten werden:

[Σeinwertige Atome + 2 Σzweiwertige Atome] : Σdreiwertige Atome = 0,9 ± 0,05
[ΣLi-Atome + 0,5 ΣMg-Atome]: ΣP-Atome = 1 ± 0,1
ΣNa-Atome : ΣK-Atome = 1,2 - 2,6,

wobei die fluorfreien Titanweißemailfritten 35 - 45, vorzugsweise 38 - 41 Gew.-% ($SiO_2 + ZrO_2$), 18 - 22, vorzugsweise 20 - 22 Gew.-% $TiO_2$, 18 - 22, vorzugsweise 18 - 20 Gew.-% ($B_2O_3 + Al_2O_3$), 15 - 18, vorzugsweise 16 - 18 Gew.-% Alkalioxide, 2,5 - 4,5, vorzugsweise 2,6 - 3,5 Gew.-% $P_2O_5$ und 0,8 - 1,4, vorzugsweise 0,8 - 1,1 Gew.-% Erdalkalioxide enthalten.

Die Atomzahlen sind analog der Ermittlung einer chemischen Formel nach Analyse leicht zu errechnen, indem man den oxidischen Versatz in Gew.% durch die entsprechenden Mol-Gewichte dividiert und in ein möglichst ganzzahliges Verhältnis zueinander setzt.

Bevorzugt sind Emailfritten, in denen der $ZrO_2$-Gehalt höchstens 10 Gew.-% des ($SiO_2 + ZrO_2$)-Gehaltes und der $Al_2O_3$-Gehalt höchstens 10 Gew.-% des ($B_2O_3 + Al_2O_3$)-Gehaltes betragen.

Die nach diesen Zusammensetzungen in üblicher Weise erschmolzenen, fluorfreien Titanweißemails sind in ihren emailtechnischen Eigenschaften mit handelsüblichen Superopakfritten vergleichbar. Unter ökologischen Gesichtspunkten sind sie diesen bei der Herstellung und Verarbeitung überlegen.

Die erfindungsgemäßen Emailfritten werden aus handelsüblichen Emailrohstoffen wie Borax ($Na_3B_4O_7 \cdot 5H_2O$), Borsäure, Quarzmehl, Zirkonsand, Magnesit, Aluminiummetaphosphat, Titandioxid und den Carbonaten von Natrium, Kalium, Lithium bei etwa 1200° C geschmolzen und über wassergekühlten Stahlwalzen abgeschreckt. Die so entstandenen Flakes werden sowohl als Emailpulver im elektrischen Feld - wie in der Deutschen Patentschrift 2 025 072 beschrieben -, als auch als wäßrige Substanzen in Schlickerform durch Tauchen oder Spritzen auf 1 mm dicke Stahlblechstreifen von 45 cm Länge und 6 cm Breite aufgebracht. Die Blechstreifen sind aus entkohltem Stahl gefertigt, die Oberfläche ist entfettet, gebeizt und vernickelt, was für das Einbrennen haftoxidfreier Emailfritten Voraussetzung ist (A.H. Dietzel, Emaillierung, Springer Verlag 1981, S. 214 ff).

Das Einbrennen sowohl von Pulver- als auch von Schlicker-beschichteten Stahlsubstraten geschieht in einem Temperaturgradientenofen während 10 Minuten in einem Temperaturbereich von normalerweise 750 bis 900° C. Die erfindungsgemäßen fluorfreien Fritten können zwischen 810 und 840° C fehlerfrei eingebrannt werden. Die Schichtstärke der so eingebrannten Emailfritten liegt zwischen 0,14 und 0,18 mm.

Die erfindungsgemäßen fluorfreien Superopakemailfritten sollen an Beispielen näher erläutert werden, ohne daß hierin eine Beschränkung zu sehen ist.

Beispiele:

Aus handelsüblichen, zur Herstellung von Emailfritten verwendeten Rohstoffen wurden in einem Schamottetiegel von 500 ml Inhalt in einem elektrisch beheizten Muffelofen bei 1220° C die Emailfritten A, B, C folgender Zusammensetzung erschmolzen:

| Atomzahl pro 10 000 | | | |
|---|---|---|---|
| | Fritte A | Fritte B | Fritte C |
| Si | 3218 | 3230 | 3218 |
| B | 2609 | 2750 | 2607 |
| Al | 91 | 88 | 91 |
| Ti | 1368 | 1311 | 1364 |
| Zr | 87 | 84 | 88 |
| P | 202 | 186 | 194 |
| Li | 137 | 150 | 151 |
| Na | 1192 | 1500 | 1199 |
| K | 991 | 602 | 986 |
| Mg | 102 | 96 | 99 |
| Co | 3 | 3 | 3 |
| $\Sigma$ | 10 000 | 10 000 | 10 000 |

$[>(Na + K + Li) + 2)Mg]:>(B + Al) =$    0,93 Fritte A
0,86 Fritte B
0,94 Fritte C

$[\Sigma Li + 0,5\Sigma Mg]:\Sigma P =$    0,93 Fritte A
1,06 Fritte B
1,03 Fritte C

$\Sigma Na:\Sigma K =$    1,20 Fritte A
2,49 Fritte B
1,22 Fritte C

Die homogenen Schmelzen wurden nach einer Verweilzeit im Ofen von 35 bis 40 min zwischen rotierenden Stahlwalzen abgeschreckt und anschließend das dabei entstehende Glasband zerkleinert. Von jeder Fritte wurden 100 g der erhaltenen Flakes in einer Bloch-Rosetti-Porzellankugelmühle nach folgendem Mühlenversatz zu einem Schlicker vermahlen:

| | Gew.-% |
|---|---|
| Fritte | 100 |
| Blauton | 3 |
| Na-Aluminat | 0,1 |
| Pottasche | 0,2 |
| Wasser | 48 |
| Dichte: | 1,72 |
| Siebrückstand: | 1 (60 $\mu$m Maschensieb) |

3

Zur Beurteilung der Brennstabilität wurde der Schlicker der Emailfritten A, B, C auf, in üblicher Weise mit Grundemail beschichteten, 10 x 10 cm Stahlbleche von 1 mm Stärke durch Spritzen aufgebracht und nach dem Trocknen 3 min bei 820° C und danach nochmals 2 min bei 820° C eingebrannt.

Zur Kontrolle der Brennbeständigkeit wurden nach 1- und 2-maligem Einbrand Hellbezugswert L und Farborte a, b gemäß DIN 6174 bestimmt. Die Farbdifferenz $\Delta E$ zwischen erstem und zweitem Einbrand beträgt weniger als 0,5 und ist damit vergleichbar mit konventionellen fluorhaltigen Titanweißemails.

Zur Bestimmung der Deckfähigkeit wurden die erfindungsgemäßen Fritten A, B, C sowie ein handelsübliches fluorhaltiges Titanweißemail D mit annähernd gleicher Helligkeit L in steigender Schichtstärke (ca. 1, 2, 3, 4 und 6 g Email/dm$^2$) auf schwarzemaillierte 10 x 10 cm Probebleche gleichmäßig aufgebracht, getrocknet und jeweils 3 min bei 820° C eingebrannt.

Die Hellbezugswerte L wurden in Abhängigkeit vom Auftragsgewicht [g Email/dm$^2$] graphisch aufgetragen. Als Deckfähigkeit bezeichnet man den reziprofen Wert des Auftragsgewichtes (g/dm$^2$) bei dem 95 % der Endhelligkeit ($R_\infty$) erreicht werden.

|  | Fritten A,B,C | Fritte D |
|---|---|---|
| Endhelligkeit ($R_\infty$) | 78,9 - 79,3 | 79,5 |
| 95 % von $R_\infty$ | 75,0 - 75,3 | 75,5 |
| Auftragsgewicht g/dm$^2$ | 1,49 - 1,52 | 1,45 |
| Deckfähigkeit | 0,67 - 0,66 | 0,69 |

**Patentansprüche**

1. Fluorfreie Titanweißemailfritten für die Emaillierung von Stahl dadurch gekennzeichnet, daß diese 35-45, vorzugsweise 38-41 Gew.-% (SiO$_2$ + ZrO$_2$), 18-22, vorzugsweise 20-22 Gew.-% TiO$_2$, 18-22, vorzugsweise 18-20 Gew.-% (B$_2$O$_3$ + Al$_2$O$_3$), 15-18, vorzugsweise 16-18 Gew.-% Alkalioxide, 2,5-4,5, vorzugsweise 2,6-3,5 Gew.-% P$_2$O$_5$ und 0,8-1,4, vorzugsweise 0,8-1,1 Gew.-% Erdalkalioxide enthalten, und das Verhältnis der Atomzahlen

[$\Sigma$einwertige Atome + 2 $\Sigma$zweiwertige Atome] : $\Sigma$dreiwertige Atome = 0,9 ± 0,05
[$\Sigma$Li-Atome + 0,5 $\Sigma$Mg-Atome]: $\Sigma$P-Atome = 1 ± 0,1
$\Sigma$Na-Atome : $\Sigma$K-Atome = 1,2 - 2,6 ist.

2. Emailfritte nach Anspruch 1, dadurch gekennzeichnet, daß der ZrO$_2$-Gehalt höchstens 10 Gew.-% des (SiO$_2$ + ZrO$_2$)-Gehaltes und der Al$_2$O$_3$-Gehalt höchstens 10 Gew.-% des (B$_2$O$_3$ + Al$_2$O$_3$)-Gehaltes beträgt.

**Claims**

1. Fluorine-free titanium white enamel frits for the enamelling of steel, characterized in that they contain 35-45, preferably 38-41% by weight (SiO$_2$ + ZrO$_2$), 18-22, preferably 20-22% by weight TiO$_2$, 18-22, preferably 18-20% by weight (B$_2$O$_3$ + Al$_2$O$_3$), 15-18, preferably 16-18% by weight alkali metal oxides, 2.5-4.5, preferably 2.6-3.5% by weight P$_2$O$_5$ and 0.8-1.4, preferably 0.8-1.1% by weight alkaline-earth metal oxides and the ratio of the atomic numbers

[$\Sigma$ monovalent atoms + 2 $\Sigma$ divalent atoms]: $\Sigma$ trivalent atoms = 0.9 ± 0.05
[$\Sigma$ Li atoms + 0.5 $\Sigma$ Mg atoms]: $\Sigma$ P atoms = 1 ± 0.1
$\Sigma$ Na atoms : $\Sigma$ K atoms = 1.2 - 2.6.

2. Enamel frits as claimed in claim 1, characterized in that the ZrO$_2$ content is at most 10% by weight of the (SiO$_2$ + ZrO$_2$) content and the Al$_2$O$_3$ content is at most 10% by weight of the (B$_2$O$_3$ + Al$_2$O$_3$) content.

**Revendications**

1. Frittes d'émail blanc au titane ne contenant pas de fluor, pour l'émaillage d'acier, caractérisées en ce qu'elles contiennent 35-45, de préférence 38-41 % en poids de (SiO$_2$ + ZrO$_2$), 18-22, de préférence 20-22 % en poids de $TiO_2$, 18-22, de préférence 18-20 % en poids de ($B_2O_3$ + $Al_2O_3$), 15-18, de préférence 16-18 % en poids d'oxyde alcalin, 2,5-4,5, de préférence 2,6-3,5 % en poids de $P_2O_5$ et 0,8-1,4, de préférence 0,8-1,1 % en poids d'oxydes alcalino-terreux, et les rapports des nombres d'atomes ont pour valeurs :

[Σ atomes monovalents + 2 Σ atomes divalents] : Σ atomes trivalents = 0,9 ± 0,05,
[Σ atomes de Li + 0,5 Σ atomes de Mg : Σ atomes de P = 1 ± 0,1
Σ atomes de Na : Σ atomes de K = 1,2-2,6.

2.  Fritte d'émail suivant la revendication 1, caractérisée en ce que la teneur en $ZrO_2$ est au maximum égale à 10 % en poids de la teneur en ($SiO_2$ + $ZrO_2$) et la teneur en $Al_2O_3$ est au maximum égale à 10 % en poids de la teneur en ($B_2O_3$ + $Al_2O_3$).